# FASCICULE DE BREVET EUROPEEN

(11) **EP 0 984 389 B1**
(45) Date de publication et mention de la délivrance du brevet: **17.12.2003**
(21) Numéro de dépôt: 98402197.2
(22) Date de dépôt: 04.09.1998
(51) Int. Cl.: G06K 17/00

(54) **Machine de personnalisation à haute cadence**
Personifizierungsvorrichtung mit hohem Tempo
High pace personalisation apparatus

(43) Date de publication de la demande: 08.03.2000
(73) Titulaire: DATACARD CORPORATION, Minnetonka, MN 55343-9015 (US)
(72) Inventeur: Nioche, Gérard, 45370 Clery Saint Andre (FR); Ormerod, Simon, 45470 Loury (FR); Medioni, Stéphane, 92160 Antony (FR)
(74) Mandataire: Debay, Yves

(56) Documents cités:
- EP-A- 0 256 921
- EP-A- 0 589 771
- EP-A- 0 797 167
- WO-A-94/15306
- US-A- 4 827 425

## Description

La présente invention concerne une machine de personnalisation à haute cadence.

Il est connu par le document EP-A-0 797 167 (LEROUX GILLES SA) du 24 septembre 1997 des machines de personnalisation pour objet portatif telles que cartes à puce et en particulier les cartes à puce dites "intelligentes" c'est-à-dire incorporant un microprocesseur ou un microcalculateur. Toutefois, ces cartes à puce qui communiquaient au départ avec le monde extérieur par l'intermédiaire du bornier à contact évoluent selon les applications, nécessitent une plus ou moins grande sécurité, vers l'usage de bomiers sans contact. Ainsi, les transmissions entre le circuit intégré de la carte à puce et le terminal peuvent se faire par des dispositifs sans contact telles que des antennes incorporées dans la carte à puce.

La présente invention a pour but de proposer une machine de personnalisation assurant la personnalisation de cartes à puce de tout type qu'elles soient à contact, sans contact ou bien mixtes, c'est-à-dire incorporant à la fois une transmission par contact et sans contact.

Ce but est atteint par le fait que la machine de personnalisation à haute cadence, comportant un dispositif de transfert de carte à puce, ladite carte à puce incorporant un circuit intégré comportant au moins une mémoire, est caractérisée en ce qu'elle comporte un plateau rotatif pourvu d'une pluralité de dispositifs de connexion mixte, c'est-à-dire incorporant à la fois la transmission par contact et sans contact, présentés parallèlement au dispositif de transfert et associés chacun à une carte électronique, chaque carte électronique permettant la personnalisation de chaque carte à puce et étant présentée devant chaque dispositif de connexion, et chaque dispositif de connexion comprend une platine solidaire du plateau tournant incorporant une antenne émettrice et réceptrice et un ensemble mobile guidé en translation vers la platine fixe et comportant une tête de connexion, ledit ensemble mobile étant sollicité en permanence par un dispositif presseur en direction de la platine solidaire du plateau tournant.

Selon une autre particularité, chaque dispositif de connexion mixte est amené successivement à un poste de chargement et de déchargement.

Selon une autre particularité, chaque carte électronique comporte un circuit d'interface avec une antenne reliée par un bus à un microprocesseur qui exécute un programme de personnalisation, ledit bus permettant également au microprocesseur d'accéder au dispositif de connexion à contact du dispositif de connexion mixte associé.

Selon une autre particularité, le bus de la carte électronique est également relié par un connecteur à une carte sécuritaire pour la personnalisation de fonction sécuritaire.

Selon une autre particularité, le bus de la carte électronique est relié en réseau par une interface reliée par un connecteur tournant à un ordinateur lequel gère l'ensemble des personnalisations et contrôle l'envoi des paramètres de personnalisation de chaque carte.

Selon une autre particularité, chaque carte électronique comporte des moyens d'aiguillage des informations de personnalisation vers le dispositif de liaison adapté au type de cartes à puce avec lequel, la carte de personnalisation doit entrer en liaison.

Selon une autre particularité, le plateau comporte des moyens d'entraînement et de positionnement angulaire permettant d'arrêter chaque platine à la hauteur des objets portatifs et dans l'alignement des moyens de guidage du transfert des objets portatifs.

Selon une autre particularité, la machine comporte des moyens de commande de l'avancement d'un poste à un autre du dispositif de transfert et d'arrêt d'un objet portatif en vis à vis du dispositif de connexion amené dans le chemin du dispositif de transfert.

Selon une autre particularité la machine comporte des moyens de commande du séquencement et de la gestion de la personnalisation.

Un autre but de l'invention est d'obtenir une machine de personnalisation qui permet de personnaliser un nombre de cartes à une cadence élevée tout en assurant la continuité des numéros de personnalisation des cartes.

Ce but est atteint par le fait que des moyens de commande du séquencement déclenchent une séquence de substitution lorsque les moyens de gestion de personnalisation signalent un défaut de personnalisation sur un objet portable, au moins un dispositif de connexion disposé dans une position du plateau étant gardé en position de réserve et chargé avec un objet portable de réserve, les moyens de gestion et de personnalisation déclenchant la personnalisation de l'objet portable de cette position de réserve lorsque les moyens de gestion ont détecté un défaut de personnalisation sur une autre carte dite "défectueuse" disposée dans un dispositif de connexion ;

Selon une autre particularité, la machine comporte un dispositif dépileur de carte en entrée de machine, un dispositif empileur en sortie de machine, un poste de test électrique entre le plateau de personnalisation et le dispositif dépileur et un poste d'éjection avant le poste de chargement sur le plateau de personnalisation. (Il peut être également situé après)

Selon une autre particularité, la machine comporte un poste d'éjection en sortie du plateau de personnalisation.

Selon une autre particularité, le poste d'éjection est activé lorsqu'une carte dont la personnalisation a été défectueuse passe devant ce poste.

D'autres particularités et avantages de la présente invention apparaîtront plus clairement à la lecture de la description ci-après faite en référence aux dessins annexés dans lesquels :
la figure 1 représente une vue en élévation de face de la machine de personnalisation ;
la figure 2 représente une vue de côté du tambour de la machine de personnalisation ;
la figure 3 représente une vue en perspective du poste d'introduction des cartes dans le plateau de personnalisation ;
la figure 4 représente une vue de gauche d'une des têtes de connexion du plateau de personnalisation ;
la figure 5 représente une vue de dessus du plateau de personnalisation et du chemin de transfert ;
La figure 6 représente le schéma des circuits électroniques nécessaires à la personnalisation de cartes avec contact ou sans contact ou mixtes.

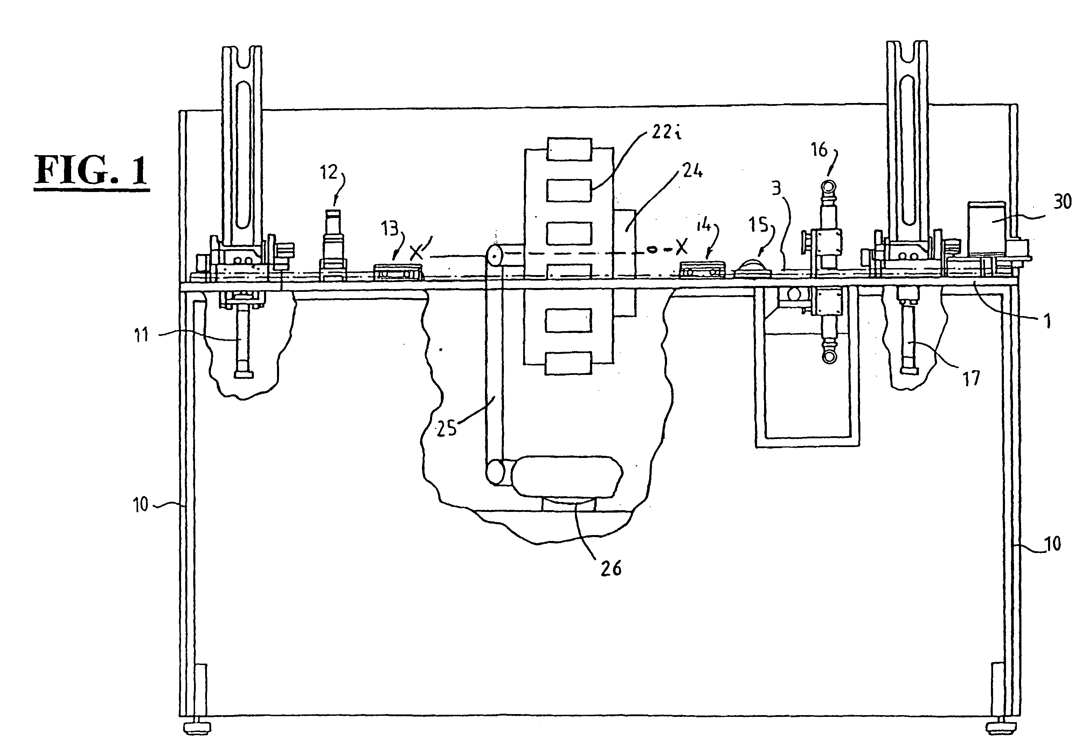

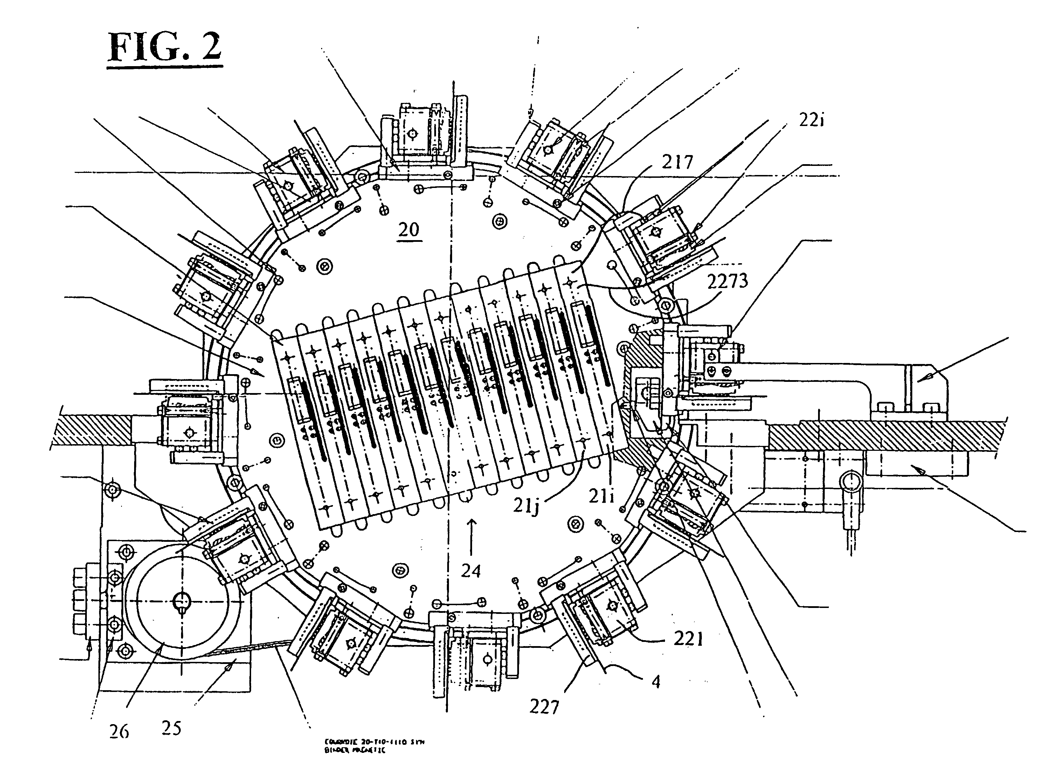

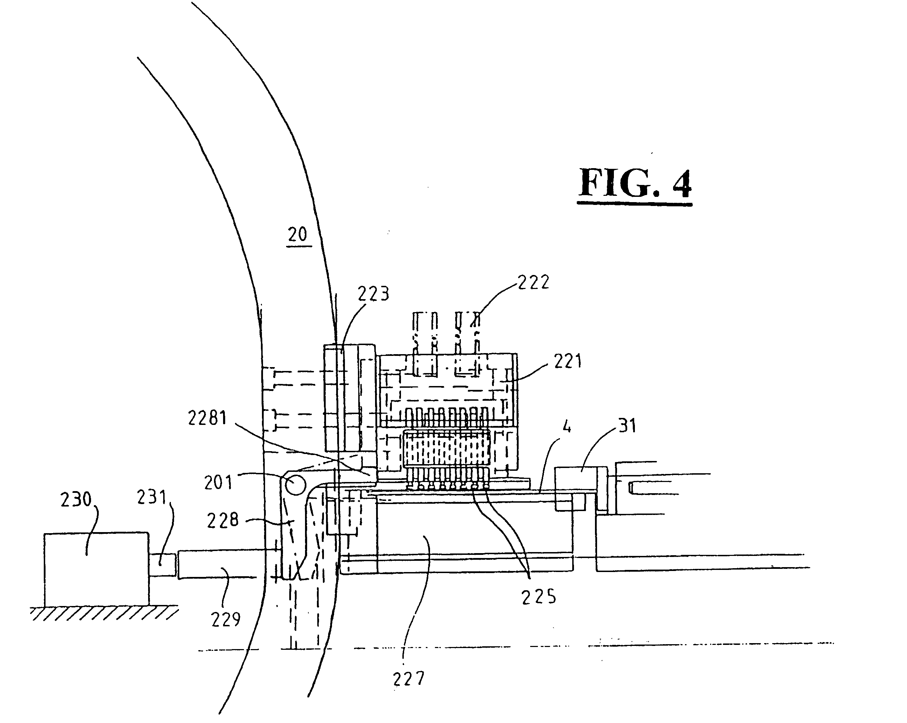

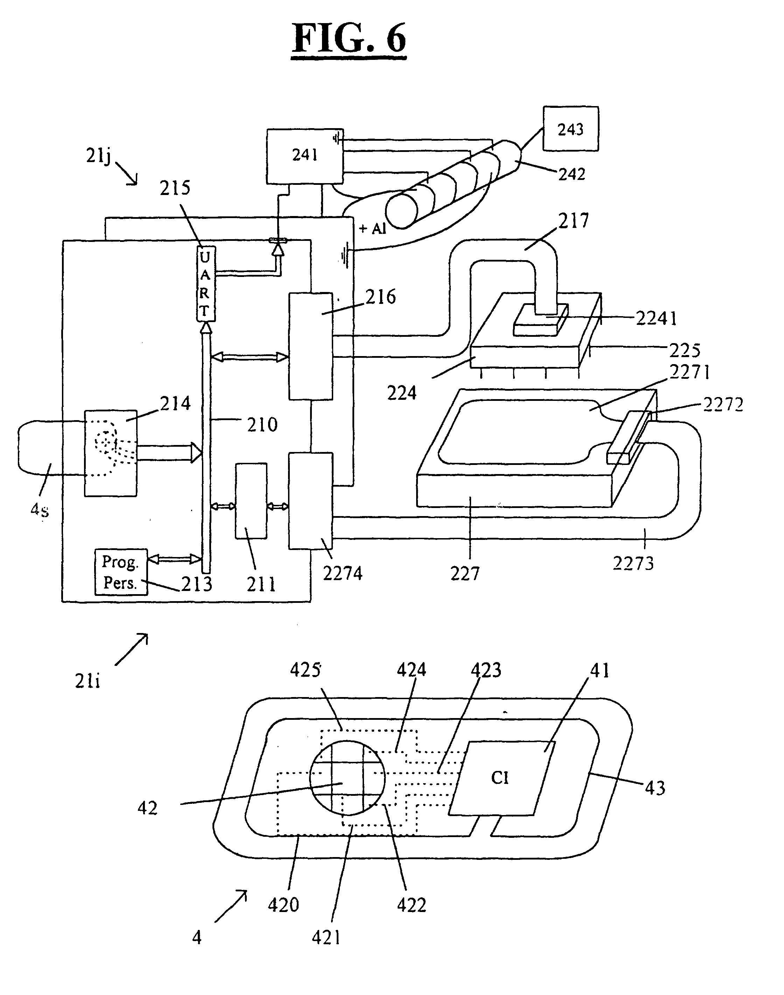

L'invention qui va être décrite en liaison avec les figures 1 à 6 est constituée d'une table (1) montée sur des pieds (10) sur le plateau de laquelle est disposé un chemin de transfert formé par une courroie crantée (3) continue circulant entre deux poulies (33, 32) d'extrémité dont l'une est entraînée par un moteur (30).

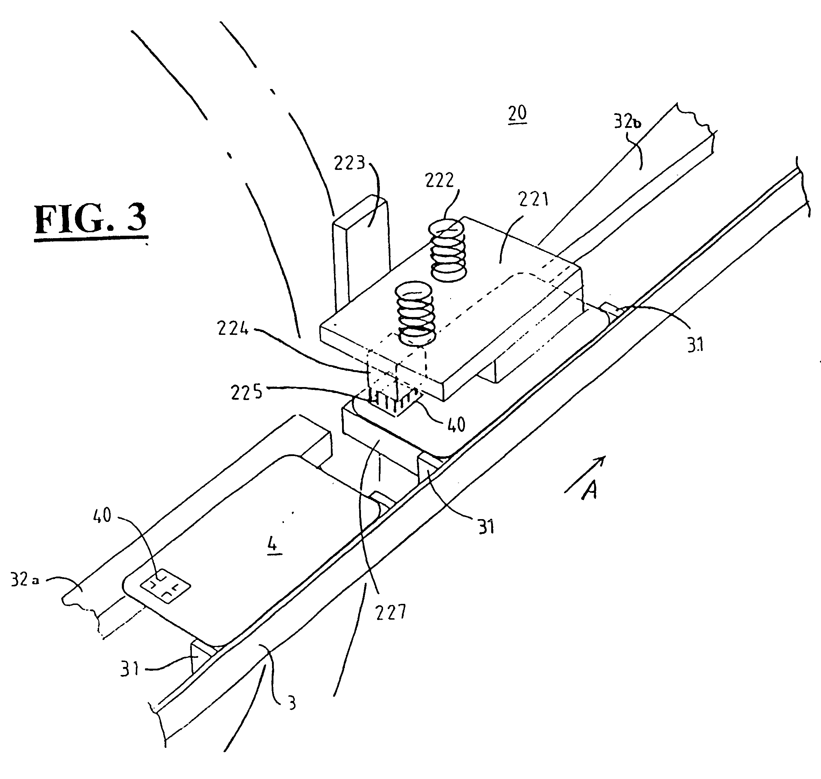

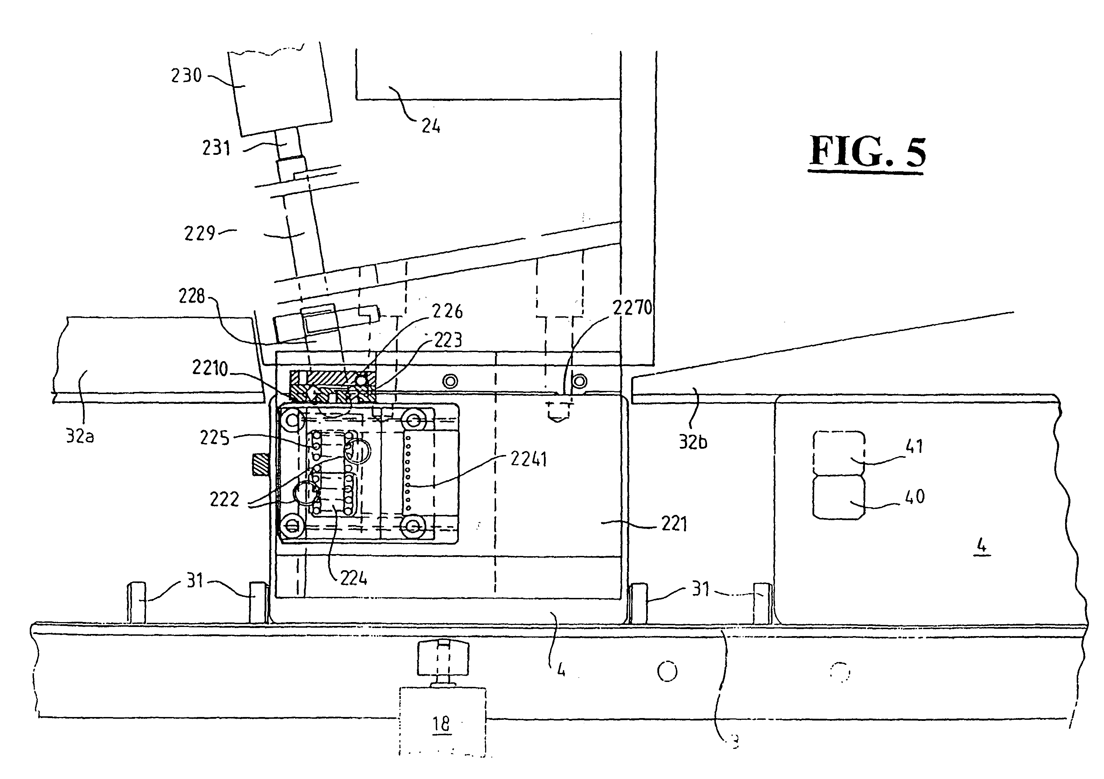

Sur cette courroie sans fin (3) sont montés à intervalle régulier, par paires, des taquets (31) dont la distance entre deux taquets (31) consécutifs correspond à la longueur d'un objet portable (4) de la taille d'une carte de crédit ci-après appelé carte à puce. Chaque paire de taquets (31) distants d'une longueur de carte de crédit est adjacente de la paire suivante d'une longueur plus courte. Les taquets (31) permettent le maintien des objets portables (4) pendant le déplacement sur la partie aller du chemin représentée par la flèche (A) sur la figure 3, et l'entraînement des cartes à puce d'un poste vers un autre. Pour plus de détail sur les taquets (31) et le dispositif de transfert, on peut se référer à la demande de brevet européen 0 589 771 du même déposant. Le chemin de transfert est complété comme on peut le voir sur les figures 5 et 3 par des rails d'appui (32a, 32b) qui sont interrompus au poste de chargement/déchargement pour permettre le passage des têtes de connexion (22i) solidaires d'un plateau tournant (20) comme on le verra ultérieurement.

La table comporte un dispositif dépileur (11) qui à partir d'un lot de cartes empilées distribue les cartes et les insère une par une entre chaque paire de taquets (31). Les cartes ainsi introduites dans le chemin de transfert sont ensuite amenées à un poste (12) de test électrique permettant, par un test électrique simple, d'éliminer les cartes mauvaises assurant ainsi une première détection rapide dans un temps par exemple, de l'ordre de 0,5 secondes. Le dépileur (11) comporte un double magasin d'entrée permettant l'approvisionnement sans arrêt de la machine, l'échange des magasins s'effectuant en temps masqué. Chaque magasin est amovible avec une contenance par exemple de 500 cartes. Les cartes (4) testées sont ensuite transférées à un poste d'éjection (13) qui permet d'éjecter les cartes mauvaises ramenant le nombre de cartes défectueuses de 4 ‰ à 2 ‰. Les cartes ayant franchi le test électrique avec succès sont transférées ensuite du poste d'éjection (13) au poste de personnalisation (2). Ce poste de personnalisation comporte un plateau tournant ou tambour (20) dont l'axe de rotation est horizontal et parallèle au plateau de la table (1) de façon à ce que le plateau (20) et les têtes de connexion (22i) se présentent perpendiculairement au chemin de transfert orienté selon la flèche (A). Ce plateau tournant (20) supporte sur son pourtour une pluralité de dispositifs de connexion (22i, 22n) de façon que chaque dispositif de connexion (22i, 22n) puissent venir s'intercaler dans le cheminement des cartes entre le rail de guidage (32a) de l'arrivée des cartes et le rail (32b) de guidage en sortie du système de personnalisation formé par le plateau tournant (20). Les dispositifs de connexion (22i) sont de dimension légèrement inférieure aux cartes et ménagent entre leur bord extérieur et la courroie crantée (3) un espace. Un dispositif, par exemple à vérin, permet de positionner correctement chaque carte, une fois que celle-ci a été amenée entre les deux éléments du dispositif de connexion (22i) mixte en appui sur les surfaces de référence (2270) de la partie fixe (227) du dispositif de connexion. Chaque dispositif de connexion (22i) mixte à une carte à puce (4) comporte un plateau fixe (227) solidaire du plateau tournant (20), et une colonne de guidage (223) solidaire du plateau (20) pour guider un élément mobile (221) supportant une tête de connexion (224) par contact. Chaque tête de connexion (224) par contact comporte une pluralité d'aiguilles (225) par contact montées sur des moyens élastiques et reliées électriquement à un connecteur (2241) qui assure la connexion avec une nappe de fil (217) reliée par un autre connecteur (216) à une carte électronique (21i) de personnalisation et de gestion de la tête de connexion (224). A chaque tête de connexion (224) d'un dispositif de connexion (22i) mixte est associée une carte de personnalisation (21i) disposée dans un rack solidaire du plateau tournant (20). Le plateau fixe (227) est en matériau non conducteur, tel qu'une matière plastique et comporte, noyé dans sa masse, une antenne d'émission et de réception (2271) qui est reliée par un connecteur (2272) et une nappe de fil (2273) à un second connecteur (2274) de branchement à la carte électronique (21i) de personnalisation. Cette carte électronique comporte un circuit d'interface d'antenne (211) disposé entre le bus (210) de la carte et le connecteur (2274). Ce circuit d'interface d'antenne (211) peut être du type de celui commercialisé par Philips sous la référence MFCM 200. Le bus (210) est également relié au connecteur (216) pour dialoguer avec la partie contact des cartes à puce (4). Le bus est aussi relié à un microprocesseur (212) de la carte de personnalisation qui exécute le programme de personnalisation des cartes à puce électronique, lequel programme est chargé dans une mémoire (213) de la carte (21i). La mémoire (213) peut éventuellement être intégrée au processeur (212) ou comme cela est représenté sur la figure, être reliée par le bus (210) à ce dernier. Enfin, le microprocesseur (212) possède également, par l'intermédiaire du bus (210) et du connecteur (214) relié à ce bus (210), une carte à puce sécuritaire dont la fonction est de fournir les informations sécuritaires nécessaires à la personnalisation des applications sécuritaires. Enfin, le bus (210) de chaque carte est relié par une interface (215) de type UART à un ordinateur de fond de panier (241). La partie mobile (221) du dispositif de connexion (22i) mixte à une carte à puce est en permanence sollicité pour sa partie à contact, en direction de la partie fixe (227) par des moyens élastiques (222) prenant appui sur une partie fixe du plateau (20). Un levier en L (228) permet par son extrémité (2281) d'agir sur le guide (2210) solidaire de la tête (224) et de la partie mobile (221) pour soulever la tête (224) et ménager entre les aiguilles de contact (225) et la partie fixe (227) un espace suffisant pour permettre le passage des cartes (4) transportées par le chemin de transfert et la courroie crantée (3) et assurer ainsi le chargement et le déchargement en cartes. Le levier (228) est actionné pour soulever la tête de connexion (224) par un doigt (229) solidaire du plateau tournant (20) disposé en face de chaque levier (228) associé à chaque dispositif de connexion (22i). Lorsqu'un dispositif de connexion (22i) mixte vient se placer au poste d'introduction et d'évacuation des cartes, en s'intercalant dans le chemin de transfert entre les guides d'arrivée (32a) et de départ (32b), le doigt d'actionnement du levier (228) se trouve en face d'un vérin (ou autre actionneur) (230) dont le piston (231) vient soulever les têtes. Ceci permet de libérer la carte à puce (4) puis, par un déplacement de la courroie (3) dans le sens de la flèche (A) figure 3, de déplacer la carte personnalisée et en même temps d'amener la carte à puce suivante dans le dispositif de connexion (22i) qui vient de terminer la personnalisation. La carte personnalisée ou sortant du plateau est transportée par la courroie (3), vers le poste d'éjection (14). Ce poste d'éjection (14) permet d'éliminer les cartes dont la personnalisation a été incomplète ou défectueuse. Si la personnalisation a réussi, la carte est transférée au poste (15) de retournement pour ensuite permettre sur son autre face son marquage à l'encre par un poste de marquage (16). Enfin la carte est transportée vers un dispositif empileur (17) classique où elle est empilée dans un magasin double, fonctionnant selon le même principe que le dispositif dépileur (11) mais en sens inverse. Le plateau tournant (20) peut ainsi comporter un grand nombre de dispositifs de connexion (22i) associés chacun à une carte électronique de personnalisation (21i) qui gère la personnalisation de la carte à puce (4) insérée par la courroie de transfert (3) dans le dispositif de connexion (22i) mixte auquel la carte de personnalisation (21i) est reliée. Le plateau peut comporter ainsi, par exemple, 32, 24, 16, 12 ou 6 dispositifs de connexion (22i) associés à autant de cartes de personnalisation, chacune des cartes de personnalisation étant reliée en réseau à un ordinateur dédié à la personnalisation. La liaison entre le système embarqué en rotation et l'installation fixe est assurée par un collecteur tournant (242). La connexion se fait par des contacts fixes solidaires de la partie fixe de la machine appuyant sur un ensemble de pistes tournantes solidaires du plateau tournant. De même les alimentations, nécessaires au fonctionnement du matériel embarqué sur le plateau tournant s'effectuent, par des contacts fixes qui sont en appui sur les pistes d'alimentation. Cet ordinateur comporte le logiciel de gestion des personnalisations des cartes et permet de gérer également le marquage à l'encre.

Enfin un autre P.C. (243) gère la commande séquentielle de la machine et reçoit les informations des différents dispositifs de positionnement tel que le codeur angulaire de position du plateau (20), les différents dispositifs de détection permettant de s'assurer de la mise en place d'une carte transportée par la courroie (3) en vis à vis du poste adéquat et de détecter la position de la connexion (3). L'axe de rotation du plateau (20) est entraîné par un moteur synchrone (26) par l'intermédiaire d'une transmission par courroie crantée (25). Les positions des dispositifs de connexion (22i) sont suivies par un système de codage non représenté.

En fonctionnement, le dispositif de transfert à courroie (3) extrait une carte (4) dont la personnalisation est terminée du plateau tournant (20) et introduit une nouvelle carte à puce dans le dispositif de connexion (22i) dont la position vient de se libérer. Après l'introduction de la carte, une rotation d'une position du plateau (20) est effectuée. La personnalisation dure un temps minimum qui peut correspondre à toute la durée de rotation d'un tour complet. Après un nombre de fraction de tour du plateau (20) suffisant, la carte personnalisée vient se replacer dans le chemin de transfert entre deux taquets libres (31). Puis cette carte est extraite du dispositif de connexion (22i) par déplacement de la courroie transfert (3) après relevage de la tête (25) et du presseur (221). Lorsque le plateau (20) comporte un ensemble de 32 dispositifs de connexion et avec une vitesse de déplacement d'un poste à un autre de l'ordre d'une carte par seconde, la machine permet d'atteindre une capacité de personnalisation de 3000 cartes par heure avec un temps maximum de personnalisation de l'ordre de 32 secondes. La personnalisation peut se faire avec des cartes (4) dites "à puce" ou "à circuit intégré" (41) dont le circuit intégré est relié au monde extérieur soit par des contacts (42) dont les plages de contact sont chacune reliée par des conducteurs respectifs (420 à 425) aux entrées du circuit intégré (41 ), soit par une antenne (43). Dans ce cas, la carte est dite "sans contact" et communique par ondes hertziennes avec une autre antenne reliée soit à un terminal soit à la machine de personnalisation. Soit encore la carte peut être mixte et comporter à la fois un moyen de connexion à un terminal ou à la machine de personnalisation par contact et un moyen de liaison au terminal ou à la machine de personnalisation sans contact par ondes électromagnétiques. Ainsi, la machine de personnalisation, par l'utilisation des contacts (225) ou par l'utilisation de l'antenne (2271), peut personnaliser des cartes avec contact, des cartes sans contact ou des cartes mixtes.

Le programme de personnalisation connaît les types des cartes et dispose dans son algorithme des instructions nécessaires pour adresser à travers le bus (210) le connecteur (216) respectif (2274) qui correspond au type de cartes à contact; respectivement sans contact. Dans le cas où les cartes sont " mixtes", le programme de personnalisation donnera accès à la carte par le connecteur à contact (216) pour la personnalisation de certaines parties dites "non sécuritaires" et accédera à la carte par le connecteur (2274) de liaison avec l'antenne pour transmettre par la partie sans contact des informations sécuritaires. Ces informations sécuritaires seront extraites d'une carte sécuritaire (4s) par le connecteur (214) lors de la personnalisation des fonctions ou applications dites "sécuritaires". Ainsi, le programme de personnalisation comprendra des moyens d'adresser sélectivement et de commander sélectivement l'adressage des informations sur l'un ou l'autre des connecteurs.

Un autre mode de réalisation de l'invention pourrait être constitué par un dispositif électronique d'aiguillage qui serait commandé par une information du programme de personnalisation, permettant de savoir à quel type de cartes on a à faire, cartes avec contact, ou cartes sans contact ou carte mixte et en fonction de l'opération en cours dans la personnalisation de valider l'accès du bus à l'un des trois connecteurs, (216) dit "à contact", (2274) dit "sans contact" et (214) dit "carte sécuritaire".

Un autre mode de réalisation de l'invention peut consister à prévoir dans le programme de personnalisation, des moyens de déterminer le type de carte lors de la présentation de celle-ci devant le dispositif de connexion associé à la carte électronique de personnalisation. Ces moyens pourraient constituer dans ce cas, en une procédure consistant à envoyer un message sur le dispositif à contact et après une certaine temporisation à regarder si la carte a répondu. En l'absence de réponse, on en déduit que la carte est du type "sans contact". Le programme envoie sur l'antenne d'émission une information, et après un certain temps, lit la réponse éventuelle transmise par la carte. Dans le cas où il y a une réponse, le programme sait qu'il a une carte sans contact à personnaliser.

Dans le cas où il n'y a pas de réponse, le dispositif considère qu'une carte n'est pas présente. Dans le cas où le dispositif à contact retransmet une réponse de la carte à puce à la carte de personnalisation, le programme se poursuit quand même par une étape d'envoi d'un message à l'antenne d'émission pour déterminer si la carte est du type "mixte". Dans le cas où la réponse est négative pour ce dernier test, le programme considère que le programme est du type "carte à contact".

Toute modification à la portée de l'homme de métier fait également partie de l'esprit de l'invention. Le fait que chaque carte de personnalisation soit embarquée sur le plateau tournant, permet de personnaliser beaucoup plus rapidement les cartes en raccourcissant les délais de transmission entre les équipements de personnalisation et les cartes à puce à personnaliser. De même, le fait de n'avoir à transmettre que les paramètres de personnalisation et d'avoir sur chaque carte un programme de personnalisation embarqué, améliore également le rendement de la machine. Enfin, l'utilisation sur chaque carte de personnalisation d'un connecteur spécifique, pour permettre la mise en place d'une carte sécuritaire délivrant les informations sécuritaires nécessaires aux opérations de personnalisation sécuritaires, améliore la fiabilité et la sécurité des opérations de personnalisation.

## Revendications

1. Machine de personnalisation à haute cadence comportant un dispositif de transfert (3, 31) de carte à puce (4), ladite carte à puce incorporant un circuit intégré comportant au moins une mémoire, la machine comportant de plus un plateau tournant (20) pourvu d'une pluralité de dispositifs de connexion (22i) présentés parallèlement au dispositif de transfert et associés chacun à une carte électronique (21i), chaque carte électronique (21i) permettant la personnalisation de chaque carte à puce (4), étant présentée devant chaque dispositif de connexion (22i), chaque dispositif de connexion (22i) comprenant une platine solidaire (227) du plateau tournant (20), et un ensemble mobile (221) guidé en translation vers la platine fixe et comportant une tête de connexion (224), ledit ensemble mobile étant sollicité en permanence par un dispositif presseur (222) en direction de la platine solidaire (227) du plateau tournant (20), la machine étant **caractérisée en ce que** chaque dispositif de connexion est de type mixte, c'est-à-dire incorporant à la fois la transmission par contact et sans contact, et **en ce que** chaque platine solidaire (227) incorpore une antenne émettrice et receptrice.

2. Machine de personnalisation à haute cadence selon la revendication 1, **caractérisée en ce que** chaque dispositif de connexion mixte (22i) est amené successivement à un poste de chargement et de déchargement.

3. Machine de personnalisation à haute cadence selon une des revendications 1 et 2, **caractérisée en ce que** chaque carte électronique comporte un circuit d'interface avec une antenne reliée par un bus à un microprocesseur qui exécute un programme de personnalisation, ledit bus (210) permettant également au microprocesseur d'accéder au dispositif de connexion à contact (225) du dispositif de connexion mixte (224) associé.

4. Machine selon la revendication 5, **caractérisée en ce que** le bus (10) de la carte électronique est également relié par un connecteur (214) à une carte sécuritaire pour la personnalisation de fonction sécuritaire.

5. Machine selon la revendication 3 ou 4 **caractérisée, en ce que** le bus (210) de la carte électronique est relié en réseau par une interface reliée par un connecteur tournant (242) à un ordinateur lequel gère l'ensemble des personnalisations et contrôle l'envoi des paramètres de personnalisation de chaque carte.

6. Machine selon la revendication 3 ou 4 ou 5, **caractérisée en ce que** chaque carte électronique comporte des moyens d'aiguillage des informations de personnalisation vers le dispositif de liaison adapté au type de cartes à puce avec lequel, la carte de personnalisation doit entrer en liaison.

7. Machine de personnalisation à haute cadence selon une des revendications 1 à 3, **caractérisée en ce que** le plateau tournant (20) comporte des moyens d'entraînement et de positionnement angulaire permettant d'arrêter chaque platine solidaire (227) à la hauteur des objets portatifs (4) et dans l'alignement des moyens de guidage (32a) du transfert des objets portatifs.

8. Machine de personnalisation à haute cadence selon une des revendications 1 à 7, **caractérisée en ce qu'**elle comporte des moyens de commandes de l'avancement d'un poste à un autre du dispositif de transfert (3, 31) et d'arrêt d'un objet portatif (4) en vis à vis du dispositif de connexion (22i) amené dans le chemin du dispositif de transfert.

9. Machine de personnalisation à haute cadence selon une des revendications 1 à 8, **caractérisée en ce qu'**elle comporte des moyens de commande du séquencement et de la gestion de la personnalisation.

10. Machine selon une des revendications 1 à 9 **caractérisée en ce que** les moyens de commande du séquencement déclenchent une séquence de substitution lorsque les moyens de gestion de personnalisation signalent un défaut de personnalisation sur un objet portable, au moins un dispositif de connexion disposé dans une position du plateau tournant étant gardé en position de réserve et chargé avec un objet portable de réserve, les moyens de gestion de personnalisation déclenchant la personnalisation de l'objet portable de cette position de réserve lorsque les moyens de gestion ont détecté un défaut de personnalisation sur une carte dite "défectueuse" disposée dans un dispositif de connexion ; les moyens de commande du séquencement assurant le déchargement des objets portables personnalisés positionnés antérieurement à l'objet portable défectueux puis le déchargement de l'objet portable défectueux et un cycle de personnalisation sur la carte de position de réserve déchargée en fin de cycle de personnalisation sur le dispositif de transfert puis le chargement d'une nouvelle carte de réserve sur cette position avant de reprendre la position de réserve permettant le déchargement de l'objet portable disposé immédiatement après l'objet portable défectueux.

11. Machine selon la revendication 10, **caractérisée en ce qu'**elle comporte un dispositif dépileur (11) de carte en entrée de machine, un dispositif empileur (17) en sortie de machine, un poste de test électrique (12) entre le plateau tournant (20) et le dispositif dépileur (11) et un poste d'éjection (13) avant le poste de chargement sur le plateau tournant (20).

12. Machine selon une des revendications 1 à 11, **caractérisés en ce que** la machine comporte un second poste d'éjection (14) en sortie du plateau tournant (20).

13. Machine selon la revendication 12 **caractérisée en ce que** le poste d'éjection est activé lorsqu'une carte dont la personnalisation a été défectueuse passe devant ce poste.

## Patentansprüche

1. Personalisierungsmaschine mit hoher Taktrate, die eine Transportvorrichtung (3, 31) für Chipkarten (4) umfasst, wobei die Chipkarte eine integrierte Schaltung umfasst, die wenigstens einen Speicher aufweist, wobei die Maschine außerdem eine drehbare Platte (20) umfasst, die mit mehreren Anschlussvorrichtungen (22i) versehen ist, die parallel zu der Transportvorrichtung vorgesehen sind und denen jeweils eine elektronische Karte (21i) zugeordnet ist, wovon jede die Personalisierung der jeweiligen Chipkarte (4), die vor jeder Anschlussvorrichtung (22i) angeordnet wird, ermöglicht, wobei jede Anschlussvorrichtung (22i) eine mit der drehbaren Platte (20) fest verbundene Platine sowie eine bewegliche Baugruppe (221), die zu der festen Platine translatorisch geführt wird und einen Anschlusskopf (224) aufweist, umfasst, wobei die mobile Baugruppe durch eine Pressvorrrichtung (222) ständig in Richtung der mit der drehbaren Platte (20) fest verbundenen Platine (227) gedrängt wird, wobei die Maschine **dadurch gekennzeichnet ist, dass** jede Anschlussvorrichtung vom Mischtyp ist, d. h. sowohl eine Übertragung mittels Kontakt als auch eine kontaktlose Übertragung umfasst, und dass jede feste Platine (227) eine Sende- und Empfangsantenne enthält.

2. Personalisierungsmaschine mit hoher Taktrate nach Anspruch 1, **dadurch gekennzeichnet, dass** jede Misch-Anschlussvorrichtung (22i) nacheinander einer Beladungs- und Entladungsstation zugeführt wird.

3. Personalisierungsmaschine mit hoher Taktrate nach einem der Ansprüche 1 und 2, **dadurch gekennzeichnet, dass** jede elektronische Karte eine Schnittstellenschaltung mit einer Antenne umfasst, die durch einen Bus mit einem Mikroprozessor verbunden ist, der ein Personalisierungsprogramm ausführt, wobei der Bus (210) dem Mikroprozessor außerdem ermöglicht, auf die Kontakt-Anschlussvorrichtung (225) der zugeordneten Misch-Anschlussvorrichtung (224) zuzugreifen.

4. Maschine nach Anspruch 5, **dadurch gekennzeichnet, dass** der Bus (10) der elektronischen Karte außerdem über einen Verbinder (214) mit einer Sicherungskarte für die Personalisierung der Sicherungsfunktion verbunden ist.

5. Maschine nach Anspruch 3 oder 4, **dadurch gekennzeichnet, dass** der Bus (210) der elektronischen Karte über eine mit einem Drehverbinder (242) verbundene Schnittstelle mit einem Rechner vemetzt ist, der die Gesamtheit der Personalisierungen steuert und das Senden der Personalisierungsparameter jeder Karte kontrolliert.

6. Maschine nach Anspruch 3 oder 4 oder 5, **dadurch gekennzeichnet, dass** jede elektronische Karte Mittel zum Lenken von Personalisierungsinformationen zu der Verbindungsvorrichtung, die an den Typ der Chipkarte angepasst ist, mit der die Personalisierungskarte in Verbindung treten soll, umfasst.

7. Personalisierungsmaschine mit hoher Taktrate nach einem der Ansprüche 1 bis 3, **dadurch gekennzeichnet, dass** die drehbare Platte (20) Antriebs- und Winkelpositionierungsmittel umfasst, die ermöglichen, dass jede feste Platine (227) auf Höhe tragbarer Gegenstände (4) und ausgerichtet auf Mittel (32a) zum Transportieren der tragbaren Gegenstände angehalten wird.

8. Personalisierungsmaschine mit hoher Taktrate nach einem der Ansprüche 1 bis 7, **dadurch gekennzeichnet, dass** sie Mittel zum Steuern des Vorschubs der Transportvorrichtung (3, 31) von einer Station zur nächsten und des Anhaltens eines tragbaren Gegenstandes (4) gegenüber der in den Weg der Transportvorrichtung geführten Anschlussvorrichtung (22i) umfasst.

9. Personalisierungsmaschine mit hoher Taktrate nach einem der Ansprüche 1 bis 8, **dadurch gekennzeichnet, dass** sie Mittel zur Steuerung des Ablaufs und des Managements der Personalisierung umfasst.

10. Maschine nach einem der Ansprüche 1 bis 9, **dadurch gekennzeichnet, dass** die Ablaufsteuermittel einen Substitutionsablauf beginnen, wenn die Personalisierungsmanagement-Steuermittel einen Personalisierungsfehler bei einem tragbaren Gegenstand melden, wobei wenigstens eine Anschlussvorrichtung, die in einer Position der drehbaren Platte angeordnet ist, in einer Reserveposition gehalten wird und mit einem tragbaren Reservegegenstand beladen wird, wobei die Personalisierungsmanagement-Steuermittel die Personalisierung des tragbaren Gegenstandes in dieser Reserveposition beginnen, wenn die Managementmittel einen Personalisierungsfehler auf einer so genannten "fehlerhaften" Karte, die in einer Anschlussvorrichtung angeordnet ist, erfasst haben, wobei die Ablaufsteuermittel das Entladen personalisierter tragbarer Gegenstände, die vor dem fehlerhaften tragbaren Gegenstand positioniert worden sind, dann das Entladen des fehlerhaften tragbaren Gegenstandes, weiterhin einen Personalisierungszyklus auf der in der Reserveposition befindlichen Karte, die am Ende des Personalisierungszyklus auf die Transportvorrichtung entladen wird, und dann das Laden einer neuen Reservekarte in diese Position, bevor sie erneut die Reserveposition einnimmt, was das Entladen des direkt nach dem fehlerhaften tragbaren Gegenstand angeordneten tragbaren Gegenstandes ermöglicht, sicherstellen.

11. Maschine nach Anspruch 10, **dadurch gekennzeichnet, dass** sie eine Vorrichtung (11) zum Entnehmen einer Karte aus einem Stapel am Eingang der Maschine, eine Stapelvorrichtung (17) am Ausgang der Maschine, eine Station (12) für elektrischen Test zwischen der drehbaren Platte (20) und der Stapelentnahmevorrichtung (11) sowie eine Auswurfstation (13) vor der Station zum Laden auf die drehbare Platte (20) umfasst.

12. Maschine nach einem der Ansprüche 1 bis 11, **dadurch gekennzeichnet, dass** sie eine zweite Auswurfstation (14) am Ausgang der drehbaren Platte (20) umfasst.

13. Maschine nach Anspruch 12, **dadurch gekennzeichnet, dass** die Auswurfstation aktiviert wird, wenn sich eine Karte, deren Personalisierung fehlerhaft gewesen ist, an dieser Station vorbeibewegt.

## Claims

1. High-speed customisation machine comprising a device (3, 31) for transferring a chip card (4), said chip card incorporating an integrated circuit comprising at least one memory, the machine further comprising a revolving platform (20) provided with a plurality of connection devices (22i), presented parallel to the transfer device and each associated with an electronic card (21i), each electronic card (21i) permitting the customisation of each chip card (4) presented in front of each connection device (22i), each connection device (22i) comprising a plate (227) integral with the revolving platform (20), and a moveable assembly (221) guided in translation towards the fixed plate and comprising a connection head (224), said moveable assembly being acted upon constantly by a pressing device (222) in the direction of the plate (227) integral with the revolving platform (20), the machine being **characterised in that** each connection device is of hybrid type, i.e. incorporating both contact and contactless transmission, and **in that** each integral plate (227) incorporates a transmitting and receiving antenna.

2. High-speed customisation machine according to Claim 1, **characterised in that** each hybrid connection device (22i) is moved in succession to a loading and unloading station.

3. High-speed customisation machine according to one of Claims 1 and 2, **characterised in that** each electronic card comprises an interface circuit with an antenna connected by a bus to a microprocessor that executes a customisation program, said bus (210) also giving the microprocessor access to the contact connection device (225) of the associated hybrid connection device (224).

4. Machine according to Claim 3, connected in that the bus (10) of the electronic card is also connected by a connector (214) to a security card for customising the security function.

5. Machine according to Claim 3 or 4, **characterised in that** the bus (210) of the electronic card is connected in a network by an interface connected by a revolving connector (242) to a computer, which manages all the customisation and controls the sending of the customisation parameters of each card.

6. Machine according to Claim 3 or 4 or 5, **characterised in that** each electronic card comprises means for routing the customisation information to the linking device adapted to the type of chip card with which the customisation card has to become linked.

7. High-speed customisation machine according to one of Claims 1 to 3, **characterised in that** the revolving platform (20) comprises means for driving and angular positioning allowing each integral plate (227) to be stopped level with the portable objects (4) and in alignment with the means (32a) for guiding the transfer of the portable objects.

8. High-speed customisation machine according to one of Claims 1 to 7, **characterised in that** it comprises means for controlling forward movement from one station to another of the transfer device (3, 31) and stoppage of a portable object (4) opposite the connection device (22i) brought into the path of the transfer device.

9. High-speed customisation machine according to one of Claims 1 to 8, **characterised in that** it comprises means for controlling the sequencing and management of customisation.

10. Machine according to one of Claims 1 to 9, **characterised in that** the means for controlling sequencing trigger a substitution sequence when the customisation management means indicate a customisation fault on a portable object, at least one connection device arranged in one position on the revolving platform being kept in a reserve position and loaded with a reserve portable object, the customisation management means triggering the customisation of the portable object in this reserve position when the management means have detected a customisation fault on a card said to be "defective" arranged in a connection device; the sequencing control means ensuring the unloading of the customised portable objects positioned prior to the defective portable object, then the unloading of the defective portable object and a customisation cycle on the card in the reserve position unloaded at the end of the customisation cycle on the transfer device, then the loading of a new reserve portable card in this position before resuming the reserve position, allowing the unloading of the portable object arranged immediately after the defective portable object.

11. Machine according to Claim 10, **characterised in that** it comprises a card unstacking device (11) at the input of the machine, a stacking device (17) at the output of the machine, an electrical test station (12) between the revolving platform (20) and the unstacking device (11) and an ejection station (13) before the station for loading onto the revolving platform (20).

12. Machine according to one of Claims 1 to 11, **characterised in that** the machine comprises a second ejection station (14) at the output of the revolving platform (20).

13. Machine according to Claim 12, **characterised in that** the ejection station is activated when a card with defective customisation passes in front of this station.
